# EUROPEAN PATENT APPLICATION

(11) **EP 1 480 219 A1**
(43) Date of publication of application: **24.11.2004**
(21) Application number: 04011953.9
(22) Date of filing: 19.05.2004
(51) Int. Cl.: G11B 27/10, G11B 27/36, G11B 27/11

(54) **Reproducing unit having digest playback capability and digest playback method**

(30) Priority: 20.05.2003 JP 2003141530
(71) Applicant: Pioneer Corporation, Tokyo-to (JP)
(72) Inventor: Morita, Kouzou, Tsurugashima-shi Saitama-ken (JP); Nakamura, Takeshi, Tsurugashima-shi Saitama-ken (JP); Miyasato, Hajime, Tsurugashima-shi Saitama-ken (JP)
(74) Representative: Reinhard - Skuhra - Weise & Partner GbR

(57) **Abstract**

A digest playback method involves accumulating plural pieces of information data each piece indicating information, selecting any one of plural pieces of information data responding to an input operation, reproducing information according to one piece of information data selected, detecting an information reproduction frequency for each of plural pieces of data, and, in response to a digest playback command, digest reproducing the information being in an order based on the number of the information reproducing frequency for the plural pieces of information data. The method, thus, provides the digest playback of the information which is expected that the user wants to really see and listen to from the recorded information.

## Description

### BACKGROUND OF THE INVENTION

### Field of the Invention

The present invention relates to a reproducing unit enjoying a digest playback capability and a digest playback method.

### Related Art

Recording units such as a hard disk recorder can record pictures of a broadcast program or image taken by the video camera, and allow the user to select and view any one of the recorded images at a later time.

In such a recording unit, because a number of images from broadcast programs or the camera are recorded, a digest playback for replaying a part of the recorded contents to quickly grasp all the recorded contents is well known.

In the conventional digest playback method, it is common to configure some scenes to be reproduced from the recorded image in the recording medium on the basis of changes in the level of sound signals, and then pick up the configured scenes in order to output a playback signal(See, for example, JP2000-253351A).

### SUMMARY OF THE INVENTION

However, the conventional digest playback method had a problem that information such as the image or sound to be reproduced is not always the precise scene or sound that the user really wants to see or listen to.

Therefore, an object of the present invention is to provide a new reproducing unit and a new digest playback method which each can solve the above mentioned problems. Another object of the present invention is to provide a reproducing unit having a digest playback capability, wherein the digest shows an information which is foreseen as the user wants to really see and listen to among the recorded information.

This invention provides a reproducing unit having a digest playback capability, which is comprised of an accumulation device for accumulating plural pieces of information data each piece indicating information, a selection device for selecting any one data piece from among the plural pieces of information data accumulated in the accumulation device responding to an input operation, a playback device for reproducing the information according to one piece of information data selected by the selection device, and a reproduction frequency detecting device for detecting an information reproduction frequency for each of the plural pieces of data; and which is characterized by the fact that the playback device performs a digest playback operation responding to a digest playback command, wherein the digest reproduces the information in an order based on the number of the information reproducing frequency for the plural pieces of information data.

Further, this invention provides a digest playback method, which method is comprised of accumulating plural pieces of information data each piece indicating information, selecting any one of the plural pieces of information data responding to an input operation, reproducing the information according to one piece of information data selected, detecting an information reproduction frequency for each of the plural pieces of information data reproduced, and, in response to a digest playback command, digest reproducing the information being in an order based on the number of the information reproducing frequency for the plural pieces of information data.

### BRIEF DESCRIPTION OF THE DRAWINGS

FIG. 1 is a block diagram showing a digest playback unit to which the invention is applied;
FIGs. 2A and 2B are tables showing a dynamic image database;
FIGs. 3A and 3B are tables showing a static image database;
FIG. 4 is a table showing a sound database;
FIG. 5 is a flowchart showing the operation of a data input part;
FIG. 6 is a flowchart showing a normal playback control operation;
FIG. 7 is a flowchart showing a digest playback control operation;
FIG. 8 is a flowchart concretely showing a digest playback operation of FIG. 7;
FIG. 9 is a table showing a relational example between the scene number and the counter value;
FIG. 10 is a chart showing a digest playback example of dynamic image;
FIG. 11 is a chart showing a digest playback example of static image;
FIG. 12 is a chart showing a digest playback example of musical piece;
FIG. 13 is a flowchart concretely showing the digest playback operation of static image data only;
FIG. 14 is a flowchart showing another example of the digest playback control operation;
FIG. 15 is a flowchart concretely showing the digest playback operation by random number as shown in FIG. 14;
FIG. 16 is a flowchart concretely showing the digest playback operation only of static image data by random number;
FIG. 17 is a flowchart concretely showing the digest playback operation by random number;
FIG. 18 is a table exemplifyingthe relationship between the scene number and the counter value and the upper level X% in the digest playback operation of FIG. 17;
FIG. 19 is a table showing the weighting factor and the counter value after multiplication by weighting factor;
FIG. 20 is a chart showing a digest playback example by random number in the dynamic image; and
FIG. 21 is a flowchart concretely showing the digest playback operation of static image data only by random number.

### DETAILED DESCRIPTION OF THE PREFERRED EMBODIMENTS

The preferred embodiments of the present invention will be described below in detail with reference to the accompanying drawings.

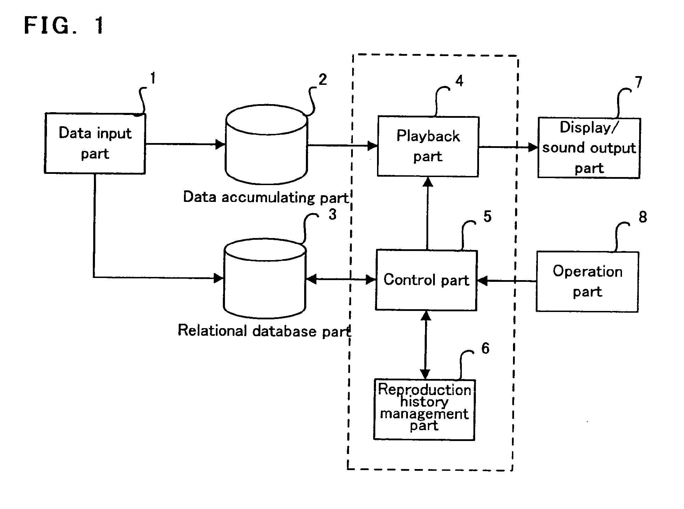

FIG. 1 shows a digest playback unit to which the invention is applied. This digest playback unit comprises a data input part 1, a data accumulating part 2, a relational database part 3, a playback part 4, a control part 5, a reproduction history management part 6, a display/sound output part 7 and an operation part 8. The playback part 4, the control part 5 and the reproduction history management part 6 as surrounded by the broken line in FIG. 1 may be integrally constituted by a microcomputer, for example.

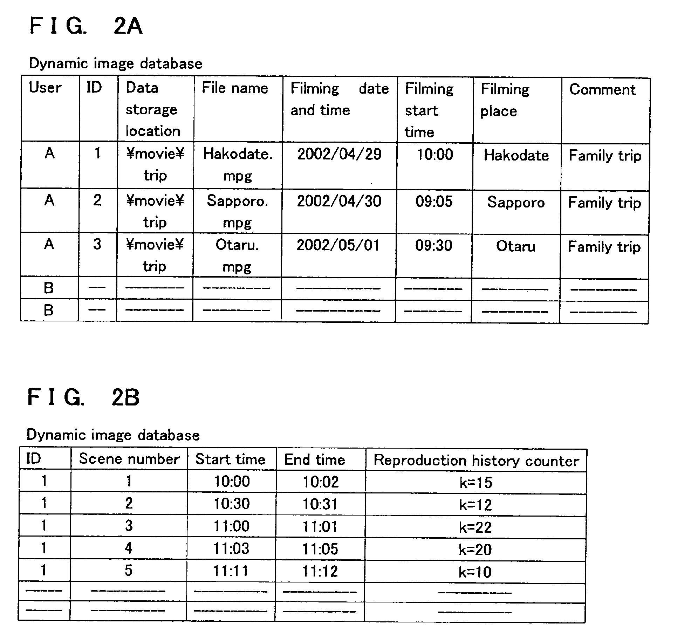

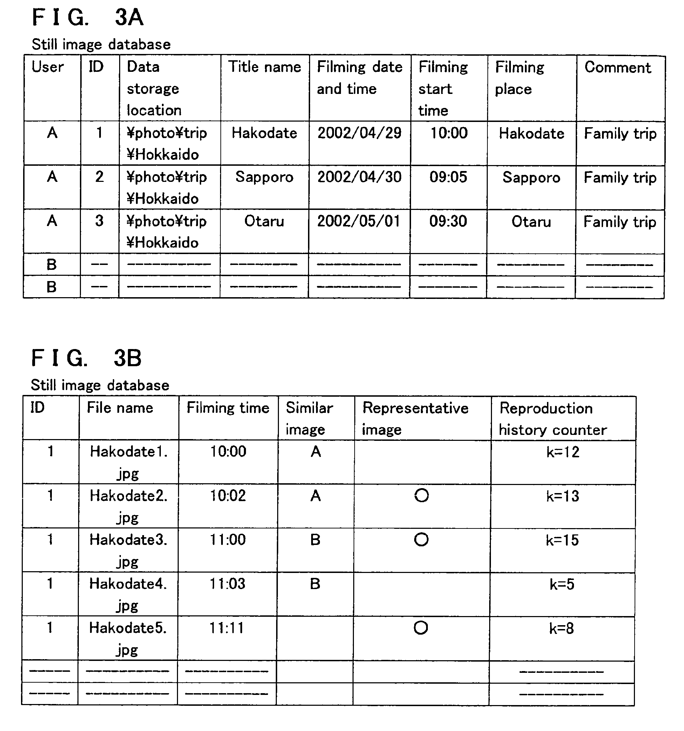

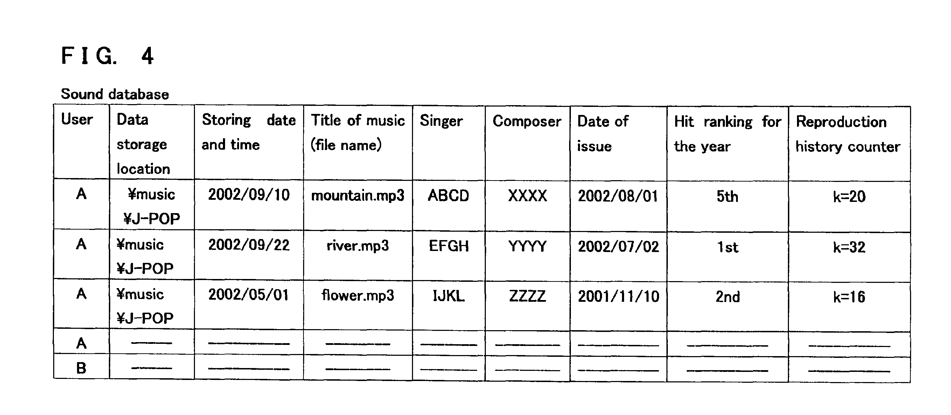

The data input part 1 receives information data such as dynamic image data, static image data and sound data from the outside and write them into the data accumulating part 2. Also, the data input part 1 receives relevant data of information data as information associated data or separately from the outside and writes them into the relational database part 3. The relevant data of dynamic image data consists of user identification, data ID, data storage location, file name, filming date and time, filmingstarttime, filmingplace, comment, scene number, and start time and end time for each scene number, as shown in FIGs. 2A and 2B. The relevant data of static image data consists of user identification, data ID, data storage location, subtitle name, filming date and time, filming start time, filming place, comment, file name, filming time for each file name, similar image, and representative image, as shown in FIGs. 3A and 3B. The relevant data of sound data consists of user identification, storage location, storing date and time, title of music (file name), singer, composer, date of issue, and hit ranking for the year, as shown in FIG. 4. Also, the relational database part 3 has a reproduction history counter formed for each scene of dynamic image data, or for each file of static image data or sound data. The count value of the reproduction history counter is represented as k, and has an initial value of zero. A file of static image data or sound data, or a scene of dynamic image data corresponds to one piece of data.

The playback part 4, which is connected to the data accumulating part 2, reads information data saved in the data accumulating part 2 responding to a reproduction signal from the control part 5, decodes the information data and supplies a video signal or a sound signal to the display/sound output part 7.

The control part 5 controls each of an information saving operation, a reproduction history saving operation, a normal reproduction control operation and a digest playback control operation in the digest playback unit on the basis of the relevant data stored in the relational database part 3 or responding to an operation command supplied from the operation part 8.

The reproduction history management part 6 manages the count value of each history counter in the relational database part 3.

The operation of the digest playback unit will be described below using the flowcharts.

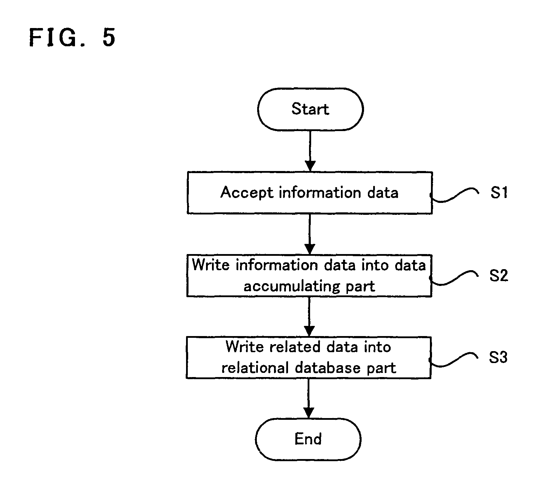

The data input part 1 receives information data such as dynamic image data, static image data or sound data from the outside (step S1) and writes the information data in the data accumulating part 2 (step S2), as shown in FIG. 5. Moreover, it writes the relevant data associated with the information data in the relational database part 3 (step S3) . At step S3, the relevant data received separately responding to an input operation of the user may be written into the relational database part 3. The information data is saved in the data accumulating part 2 by a data input operation on this data input part 1, and its relevant data is saved in the relational database part 3.

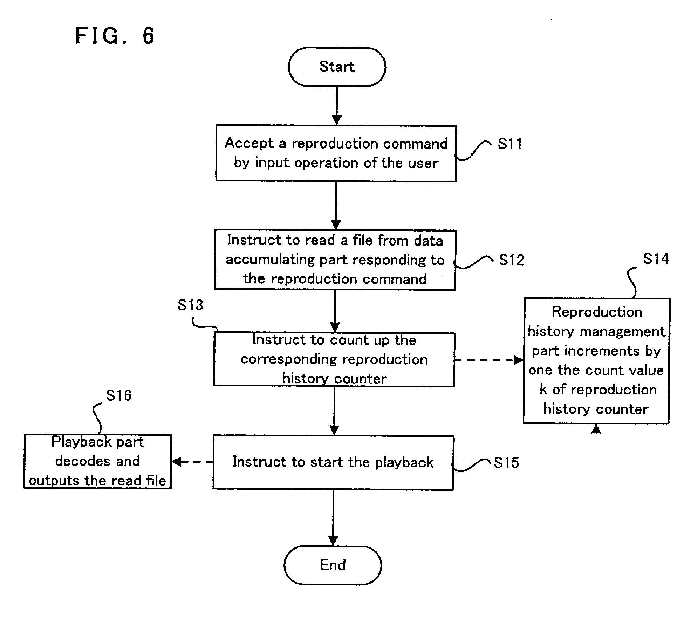

In the normal image/sound reproduction, the user makes an input operation on the operation part 8. The control part 5 accepts a reproduction command according to the input operation of the user from the operation part 8 (step S11) , as shown in FIG. 6. The reproduction command contains a file name and a scene number for the dynamic image data. The reproduction command contains a file name for the static image data or the sound data. If the reproduction command is accepted, the control part 5 controls the playback part 4 to read a file corresponding to the reproduction command from the data accumulating part 2 in accordance with the reproduction command (step S12), and instructs the reproduction history management part 6 to count up the reproduction history counter corresponding to the file name or scene number indicated by the reproduction command (step S13). The reproduction history management part 6 increments by one the count value k of the reproduction history counter corresponding to each scene for the dynamic image data or each file name for the static image data or the sound data .in response to an command of counting up and updates a reproduction history (step S14). The control part 5 issues a reproduction start command to the playback part 4 (step S15), and accordingly the playback part 4 decodes data of file format read from the data accumulating part 2 and supplies the decoded data to the display/sound output part 7 (step S16). Thereby, at least one of reproduced image and reproduced sound is output from the display/sound output part 7.

The count value k of the reproduction history counter corresponding to the file name or scene number of reproduction object is incremented by one, every time the user performs the input operation for playback. Hence, the count value k of each reproduction history counter is updated, as shown in FIGs. 2A to 4, for example.

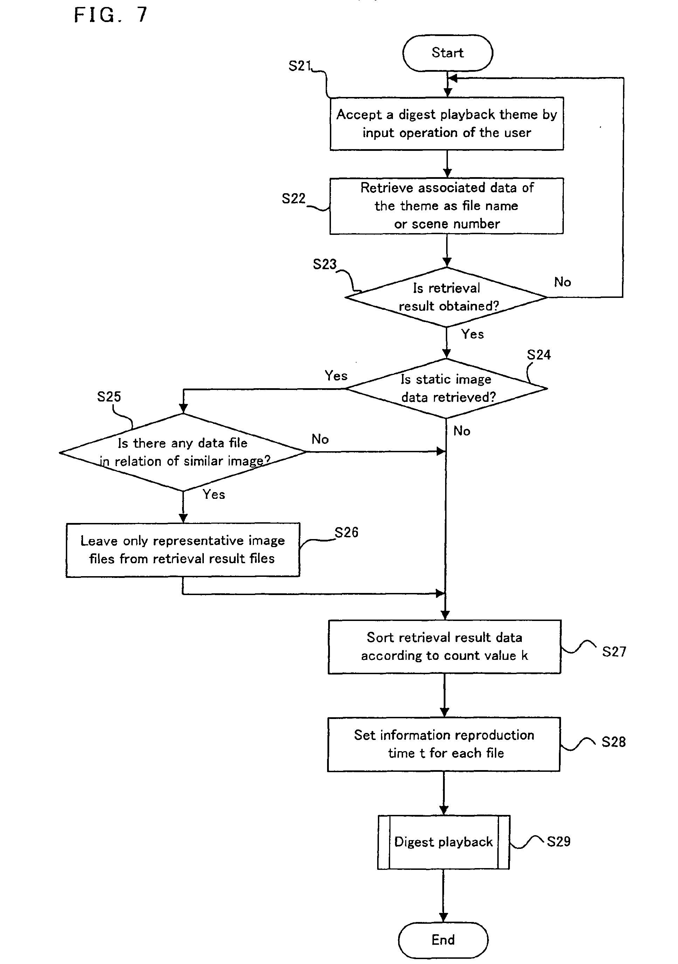

In the digest playback, the user inputs a theme for the digest playback from the operation part 8. The control part 5 accepts the theme for digest playback from the operation part 8 (step S21) , retrieves data associated with its theme as the file name or scene number (step S22) , and determines whether or not data is resulted from retrieval (step S23), as shown in FIG. 7. The retrieval at step S22 is performed using the relational database part 3. For example, the file name, filmingplace or comment saved in the relational database part 3 is retrieved, and it is determined whether or not the same or associated character string exists. For the sound data and static image data, the file name is retrieved, but for the dynamic image data, the scene number, but not the file name, is retrieved. If the file name or scene number associatedwith the input theme is not retrieved, the operation returns to step S21 to accept a new theme. In this case, the user is prompted to make an input operation for the new theme.

On the other hand, when data associated with the input theme is retrieved as the file name or scene number, it is discriminated whether or not the file of static image data is contained therein (step S24). If the file of static image data exists, it is discriminated whether or not the data files in mutual similarity relation exist (step S25) . If the data files in mutual similarity relation exist, the file of a representative image is only left behind, and the files of other similar images are deleted from the retrieval result file (step S26). The representative image has the largest count value k of the reproduction history counter among the similar images. As shown in FIG. 3, the files of similar image are attached with the same sign (A, B) in the relational database part 3, and the representative image is attached with the sign (e.g., ○).

If the file of static image data is not contained in the retrieval result data at step S24 or if there is no relation of similar images at step S25, step S27 is performed. Step 27 is also performed after execution of step S26.

The control part 5 sorts the retrieval result data according to the count value k of the reproduction history counter at step S27. That is, the count value k of the reproduction history counter for each file and scene is read from the relational database part 3, and the files are arranged in the descending order of the count value k. Further, the information reproduction time t is set for each file (step S28). Particularly, in the case of dynamic image data or sound data, the reproduction time t for the initial part thereof is defined. For example, the reproduction time may be determined according to the size of f ile or a difference between the start time and the end time of scene. Also, when the sound data is a musical piece, a highlight part of the musical piece (so-called a climax) may be set as the reproduction time t.

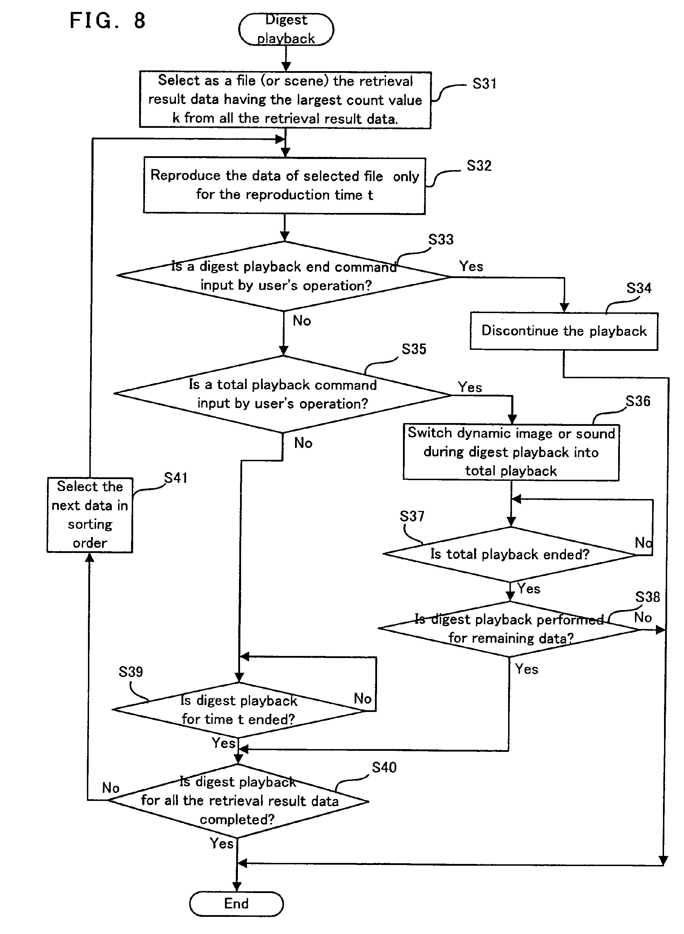

After executing step S28, the control part 5 executes the digest playback operation (step S29). In the digest playback operation, the retrieval result data having the largest count value k of the reproduction history counter is selected as shown in FIG. 8 (step S31). The playback part 4 starts to reproduce the data of the selected file for a reproduction time of step S28 (step S32). That is, the data in selected file format is read from the data accumulating part 2 by the playback part 4, and the read data is decoded. If the read data is dynamic image data, the dynamic image reproduction is performed from the dynamic image data, if it is static image data, the static image reproduction is performed, or if it is sound data, the audio reproduction is performed. It is discriminated whether or not a digest playback end command is issued from the operation part 8 by the input operation of the user (step S33). That is, it is discriminated whether or not the reproduction end is requested during the digest playback by the user. When the digest playback end command is issued, the digest playback of the playback part 4 is discontinued (step S34).

When the digest playback end command is not issued, it is discriminated whether or not a total reproduction command for the dynamic image or sound during the digest playback is issued from the operation part 8 by the input operation of the user (step S35). If the total reproduction command is issued, the operation is switched into the total reproduction in which the total data of the dynamic image scene or sound during the digest playback is reproduced (step S36) . That is, the playback part 4 is instructed to perform the total reproduction up to the end, but not the digest playback for the set time t (step S37). If the total reproduction is ended, it is discriminated whether or not the digest playback is resumed for remaining data of the retrieval result data (step S38). This is determinedbymaking a display indicating whether or not to resume the digest playback on the display/sound output part 7 after the end of total reproduction, and prompting the user to make a selection on the operation part 8. If the digest playback is not resumed, the digest playback operation is ended, or if the digest playback is resumed, step S40 is performed.

On the other hand, if the total reproduction command is not issued, the control part 5 discriminates whether or not the digest playback started at step S32 is performed for the set time t (step S39). If it is not performed for the set time t, the digest playback started at step S32 is continued until the set time t is ended. If the digest playback for the set time t is performed, it is discriminated whether or not the digest playback of all the retrieval result data is ended (step S40). If the digest playback for all the retrieval result files is ended, the digest playback operation is ended. On the other hand, if the digest playback for all the retrieval result data is not ended, the next largest count value k of the reproduction history counter in the sorting order at step S27 is selected from among the retrieval result data (step S41), and the operation returns to step S32 to start to reproduce the data in the selected file format for reproduction time at step S28.

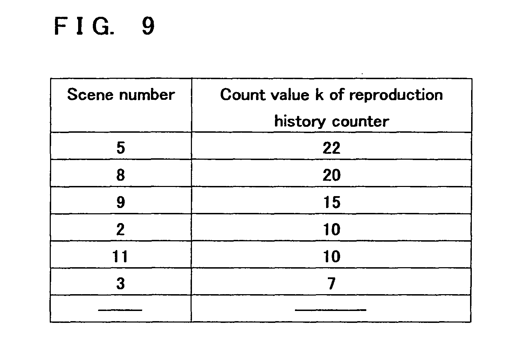

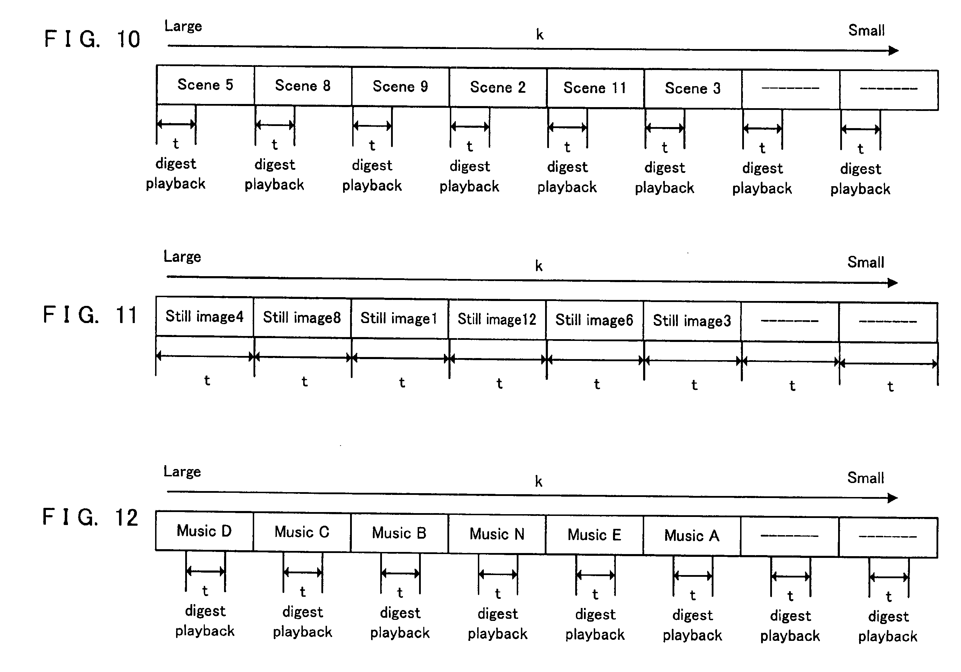

Suppose that the results that the dynamic image data in a unit of scene retrieved in accordance with the theme instructed by the user are sorted in the descending order of the count value k of the reproduction history counter, namely, the reproduction frequency, are given as shown in FIG. 9. When the digest playback of the dynamic image scenes is performed, the dynamic image reproduction is performed for the set time t from the beginning of each scene in the order of scenes 5, 8, 9, 2, 11, 3, .., as shown in FIG. 10.

When the results that the static image data files retrieved in accordance with the theme instructed by the user are sorted in the descending order of the count value k of the reproduction history counter are in the order of static images 4, 8, 1, 12, 6, 3, .., for example, each static image is displayed for the set time t in the order of static images 4, 8, 1, 12, 6, 3, .., as shown in FIG. 11, on the digest playback of static image data files. The static image has a shorter definite set time t for the digest playback than that for the dynamic image.

When the results that the sound (here, assuming it to be music.) data files retrieved in accordance with the theme instructed by the user are sorted in the descending order of the count value k of the reproduction history counter are in the order of musical compositions D, G, B, N, E, A, .., for example, the highlight part of each musical composition is played for the set time t in the order of musical compositions D, G, B, N, E, A, .. , as shown in FIG. 12, on the digest playback of the sound data files.

Hence, since the digest playback is made according to the reproduction frequency of each piece of information such as dynamic image reproduced by the user, the digest playback image and sound are obtained for the information which it is expected that the user wants to really view or listen to. Since the digest playback of image or music is performed in order of decreasing reproduction frequency, the information which the user wants to view and listen to more preferentially is reproduced earlier. Moreover, the digest playback involving the use of the highlight part of image or musical composition is more favorable for the user.

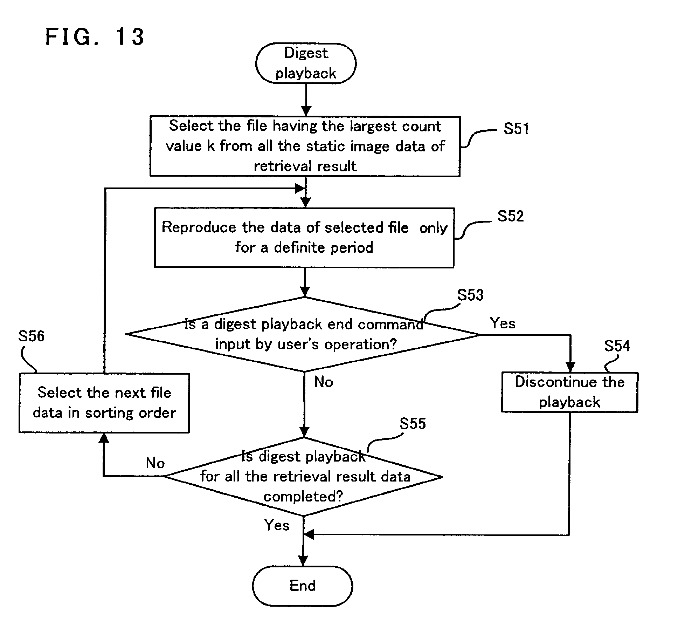

The digest playback operation only of static images may be performed as a slide show, as shown in FIG. 13. That is, the control part 5 selects the file having the largest count value k of the reproduction history counter among a unit of files in the retrieval result data of static image (step S51). The playback part 4 is instructed to reproduce the static image data of the selected file for a definite period of time (step S52). Thereby, the reproduced static image is displayed on the display/sound output part 7. It is discriminated whether or not a digest playback end command is issued from the operation part 8 by the input operation of the user during this reproduction of static image (step S53). That is, it is discriminated whether or not the reproduction end is requested during the digest playback by the user. When the digest playback end command is issued, the digest playback is discontinued (step S54).

When the digest playback end command is not issued, it is discriminated whether or not the digest playback for all the retrieval result files of static image data is completed (step S55). If the digest playback for all the retrieval result files of static image data is completed, the digest playback operation is ended. On the other hand, if the digest playback for all the retrieval result files of static image data is not completed, the next largest count value k of the reproduction history counter in the sorting order at step S27 is selected from among the retrieval result files of static image data (step S56) , and the operation returns to step S52 to start to reproduce the static image data in the selected file format.

In the above embodiment, the order in which the digest playback for the retrieval result files in accordance with the theme specified by the user is performed is the descending order of the count value k of the reproduction history counter, but is not limited thereto. For example, the digest playback for the retrieval result files may be performed in the random order.

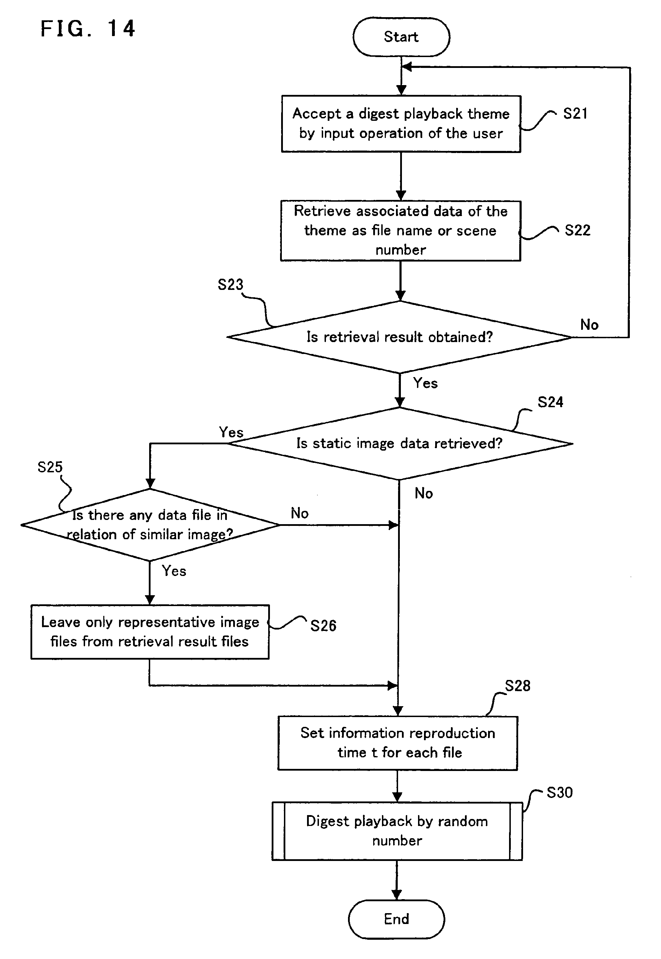

FIG. 14 is a flowchart of the digest playback control for performing the digest playback in the random order. Steps S21 to S28 (except for step S27) for the digest playback control in FIG. 14 are the same as those for the digest playback control as shown in FIG. 7. Step S27 is not performed in the digest playback control of FIG. 14. After executing step S28, the control part 5 performs the digest playback by random numbers (step S30).

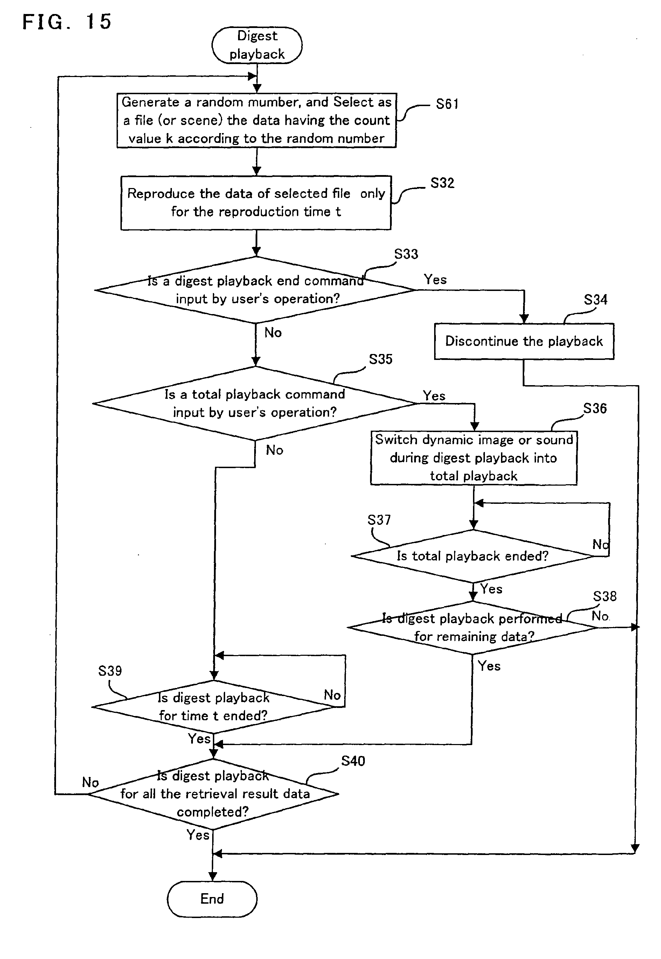

The digest playback operation at step S30 is performed as shown in FIG. 15. The control part 5 generates a random number, and determines the count value k according to the generated random number (step S61). Then, it controls the playback part 4 to start the reproduction for the reproduction time at step S28 in accordance with the file corresponding to the determined count value (step S32). Steps S32 to S40 are the same as those for the digest playback operation as shown in FIG. 8. If it is discriminated at step S40 that the digest playback for all the retrieval result files is not completed, the operation returns to step S61 to determine the count value k according to a next generated random number for the remaining files for which the digest playback is not performed.

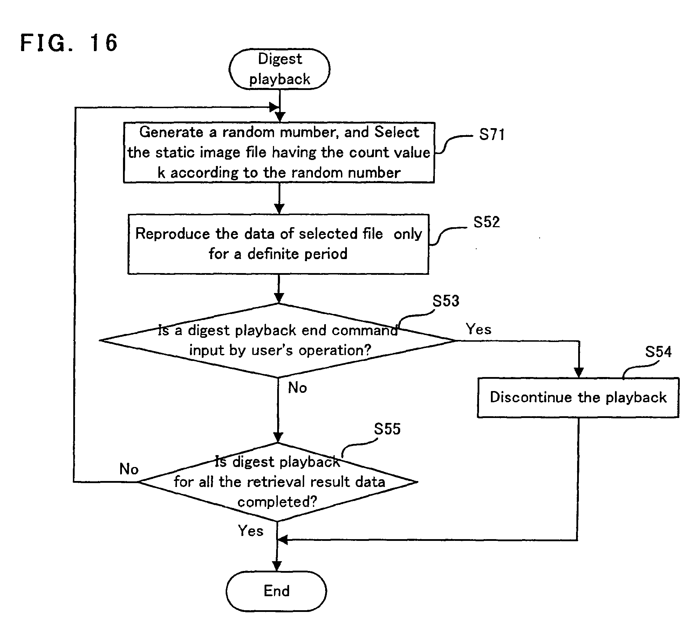

The digest playback in random order may be applied to the digest playback operation only of static images. As shown in FIG. 16, the control part 5 generates a random number, and determines the count value k according to the generated random number (step S71). Then, it instructs the playback part 4 to perform the reproduction for the reproduction time in accordance with the static image data of file corresponding to the determined count value (step S52). Steps S52 to S55 are the same as those for the digest playback operation as shown in FIG. 13. If it is discriminated at step S55 that the digest playback for all the retrieval result files is not completed, the operation returns to step S71 to determine the count value k according to a next generated random number for the remaining files for which the digest playback is not performed.

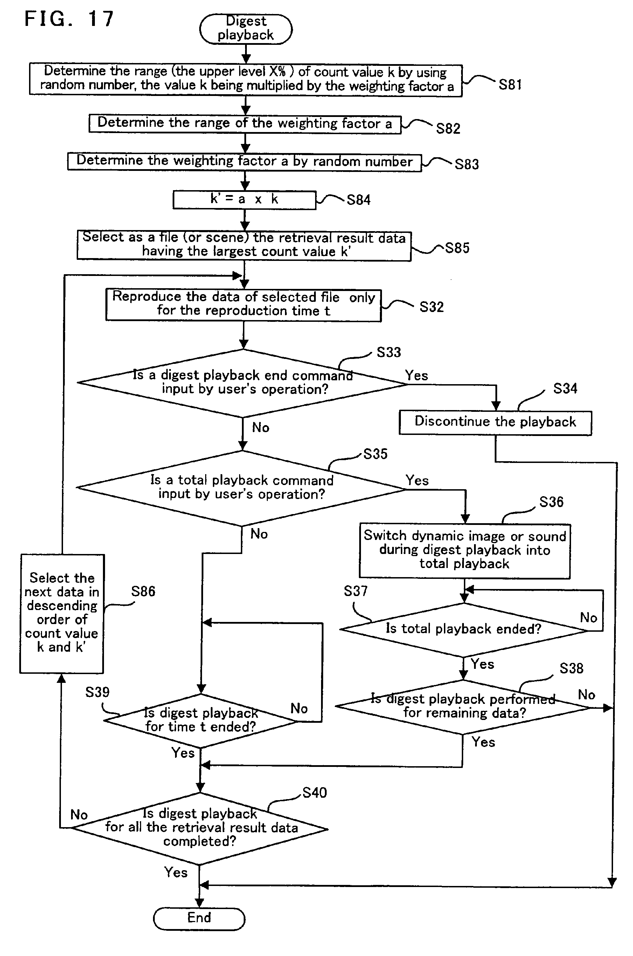

FIG. 17 is a flowchart of the digest playback control in random order. In the digest playback control as shown in FIG. 17, the control part 5, first of all, determines the range of count value k by using random number, wherein the value k is multiplied by the weighting factor a (step S81). That is, the numeral X for the upper level "X%" for the count value k of the reproduction history counter with respect to the retrieval result data having the file name (including the scene number) are determined by generating a random number. Also, the range of weighting factor a is determined such as the range from 0.5 to 1.5 (step S82) , and the weighting factor a for each file in the range of the upper level X% is determined within the range of weighting factor a by generating a random number (step S83). Thereafter, for each file in the upper level X%, the count value k' is calculated by kxa (step S84), and the file having the largest count value k' is selected from among the files in the upper level X% (step S85). The steps after executing step S85 are the same as steps S32 to S40 as shown in FIG. 8, and thus the description about these steps is omitted here.

If it is discriminated at step S40 that the digest playback for all the retrieval result files is not completed, the file having the next count values k and k' of the reproduction history counter in the sorting order is selected from the retrieval result files (step S86) , and the operation returns to step S32 to start to reproduce the data in the selected file format for the reproduction time at step S28. At step S86, the count value k' is employed for the file having the count value k' calculated, or the count value k is employed for other files, whereby the files are selected in order of decreasing k and k'.

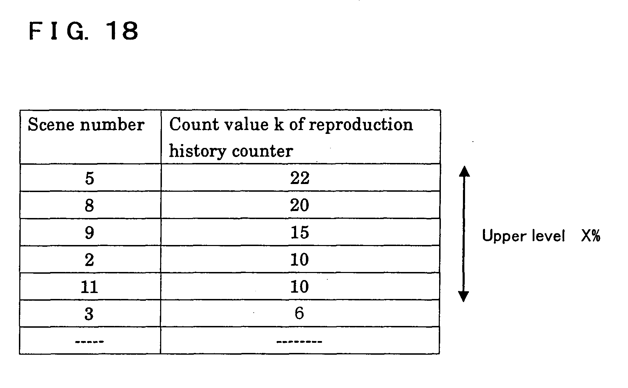

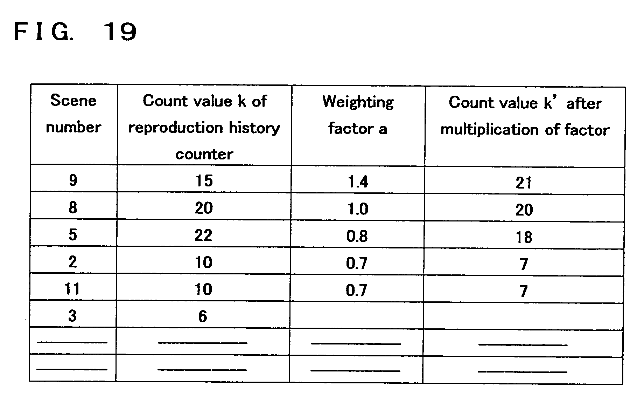

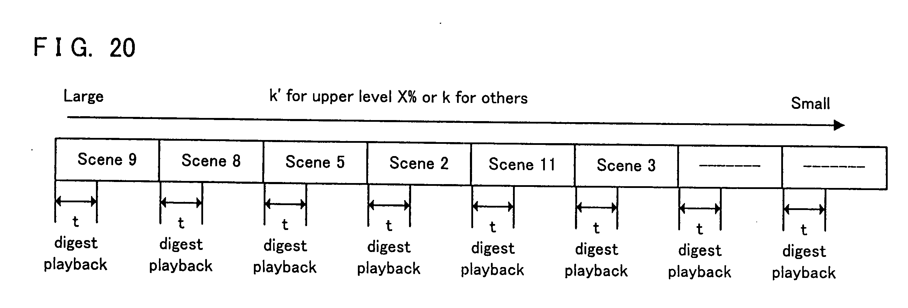

Suppose that the results that the dynamic image scenes retrieved in accordance with the theme instructed by the user are sorted in the descending order of the count value k of the reproduction history counter, namely, the reproduction frequency, are given as shown in FIG. 18. The scenes for the upper level X% of the count value k are determined in accordance with this sorting order as the scene numbers 5, 8, 9, 2 and 11 by the random number generated at step S81. At step S82, the range of weighting factor a is determined such as the range from 0.5 to 1.5, and the values of the weighting factor a for data of the scene number 5, 8, 9, 2, and 11 are defined by generating respective random numbers at step S83, as shown in FIG. 19. Hence, each count value k' is calculated at step S84, as shown in FIG. 19. When the digest playback for the dynamic image scenes is performed, the dynamic image reproduction is performed for the reproduction time t from the beginning of each scene in the order of scene 9, 8, 5, 2, 11, 3, .., shown in FIG. 20.

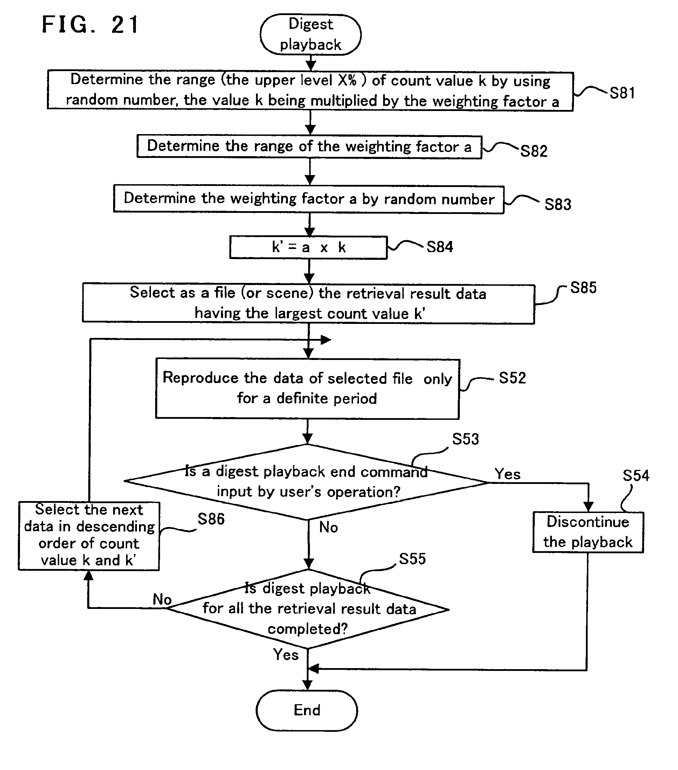

In the same manner as the digest playback operation as shown in FIG. 17, the digest playback operation only of static images is performed employing the count values k', as shown in FIG. 21. This digest playback operation is performed in the same manner as at steps S81 to S85, steps S52 to S55 and steps S86, except that the files are limited to the static image files, and the description of this digest playback operation is omitted here.

As described above, with this invention, it is possible to perform the digest playback of the information which is expected that the user really wants to view and listen to among the recorded information.

The present invention has been described in detail by way of illustration and embodiments for purposes of clarity and understanding. However, it will be obvious that the present invention is not limited to the embodiments described herein, and that certain changes and modifications may be practiced within the scope of the invention, as limited only by the scope of the appended claims.

## Claims

1. A reproducing unit having a digest playback capability, which comprises:
an accumulation device for accumulating plural pieces of information data each piece indicating information,
a selection device for selecting any one of the plural pieces of information data accumulated in the accumulation device responding to an input operation,
a playback device for reproducing the information according to one piece of information data selected by the selection device, and
which is **characterized in that**:
the reproducing unit further comprises a reproduction frequency detecting device for detecting an information reproduction frequency for each of the plural pieces of data; and
said playback device performs a digest playback operation responding to a digest playback command, the digest reproducing the information in an order based on the number of the information reproducing frequency for the plural pieces of information data.

2. The reproducing unit according to claim 1, wherein said playback device further comprises a theme input device for accepting a digest playback theme responding to an input operation, and a retrieval device for retrieving one or more pieces of information data indicating information matched with the theme accepted by said theme input device in terms of the contents thereof from the accumulated plural pieces of information data, and
wherein the information for the retrieved pieces of information data are reproduced in an order based on the information reproducing frequency on the digest playback operation.

3. The reproducing unit according to claim 1 or 2, wherein said playback device reproduces, on the digest operation, a portion of information for the piece of information data to be reproduced, wherein the information data to be reproduced is a dynamic image data or sound data.

4. The reproducing unit according to claim 3, wherein the portion of information is started from the beginning of the piece of information data and ended by a prescribed reproduction time course.

5. The reproducing unit according to claim 1 or 2, wherein said playback device reproduces, on the digest operation, the whole of information for the piece of information data to be reproduced during a prescribed period of time, wherein the information data to be reproduced is a static image data.

6. The reproducing unit according to any of claims 1 to 5, wherein said playback device uses a decreasing order of the information reproduction frequency as the order based on the information reproduction frequency.

7. The reproducing unit according to any of claims 1 to 5, wherein said playback device uses, as the order based on the information reproduction frequency, a order which is changed from the decreasing order of the information reproduction frequency by using random numbers.

8. The reproducing unit according to any of claims 1 to 5, wherein said playback device further comprises a multiplication device for multiplying each information reproduction frequency belonging to in the descending order of the information reproduction frequency by a separate weighting factor determined by a random number, wherein the upper-level range is defined by another random number; and
the playback device uses, as the order based on the information reproduction frequency on the digest playback operation, a decreasing order of the weighting factor-multiplied information reproduction frequency in the upper-level range.

9. The reproducing unit according to any of claims 2 to 8, further comprising a relational database part for storing relevant data for each of plural pieces of information data, and wherein said retrieval device retrieves one or more pieces of information data indicating information matched with a theme accepted by said theme input device in terms of the contents, using relevant data stored in said relational database part.

10. The reproducing unit according to any of claims 2 to 9, wherein said playback device further comprises a discrimination device for discriminating whether or not at least two pieces of information data are data representing mutually similar images, when at least two of plural pieces of information data retrieved by said retrieval device are static image data, and
a device for leaving behind only a piece of information data having the highest information reproduction frequency among the at least two pieces of information data, when said discrimination device discriminates that the at least two pieces of information data are data representing mutually similar images.

11. The reproducing unit according to any of claims 1 to 10, wherein said reproduction frequency detecting device has a plurality of reproduction counters each provided corresponding to each of the plural pieces of data, and
a device for incrementing by one a count value corresponding to the one piece of information data among the plurality of reproduction counters, in which the count value of each of the plurality of reproduction counters is the information reproduction frequency.

12. A digest playback method comprising:
accumulating plural pieces of information data each piece indicating information;
selecting any one of the plural pieces of information data responding to an input operation;
reproducing information according to one piece of information data selected;
detecting an information reproduction frequency for each of the plural pieces of data reproduced; and
in response to a digest playback command, digest reproducing the information being in an order based on the number of the information reproducing frequency for the plural pieces of information data.

13. A digest playback method according to Claim 12 , wherein the method is performed by using the reproducing unit according to any of Claims 1 to 11.
